# EUROPÄISCHE PATENTSCHRIFT

(11) **EP 2 091 683 B1**
(45) Veröffentlichungstag und Bekanntmachung des Hinweises auf die Patenterteilung: **16.11.2011**
(21) Anmeldenummer: 07801798.5
(22) Anmeldetag: 22.08.2007
(51) Int. Cl.: B23D 47/04, B23D 59/00

(54) **DRUCKBALKEN FÜR EINE SÄGEMASCHINE**
PRESSURE BEAM FOR A SAWING MACHINE
BARRE DE PRESSION POUR UNE MACHINE À SCIER

(30) Priorität: 24.11.2006 DE 102006055446
(43) Veröffentlichungstag der Anmeldung: 26.08.2009
(73) Patentinhaber: HOLZMA Plattenaufteiltechnik GmbH, 75365 Calw-Holzbronn (DE)
(72) Erfinder: HANSEN, Roland, 75365 Calw (DE); RIEGER, Klaus, 75328 Schömberg (DE)
(74) Vertreter: Knapp, Thomas
(86) Internationale Anmeldenummer: PCT/EP2007/007365
(87) Internationale Veröffentlichungsnummer: WO 2008/061577

(56) Entgegenhaltungen:
- EP-A- 0 508 276
- DE-A1- 4 433 829
- DE-A1- 19 720 934
- DE-C1- 4 331 283

## Beschreibung

Die Erfindung betrifft einen Druckbalken für eine Sägemaschine nach dem Oberbegriff des Anspruchs 1.

Ein solcher Druckbalken ist aus DE 4 433 829 A1 bekannt. Sägemaschinen, beispielsweise Plattenaufteilanlagen, verfügen üblicherweise über einen Auflagetisch, auf dem die plattenförmigen Werkstücke einer Säge zugeführt werden. Das Sägeblatt wird dabei längs eines Schlitzes im Auflagetisch bewegt. Zur Erhöhung der Präzision des Sägeschnitts wird das Werkstück im Bereich der Säge durch einen Druckbalken auf den Auflagetisch gedrückt. Damit die Bewegung des Sägeblatts vom Druckbalken nicht gestört wird, ist in der Unterseite des Druckbalkens ein Schnittspalt vorhanden, in den das Sägeblatt bei seiner Bewegung eingreift.

Bei einem aus der DE 43 31 283 C1 bekannten Druckbalken ist oberhalb des Schnittspalts im Druckbalken ein Absaugkanal angeordnet, der mittels einer Absaugöffnung an eine Saugquelle angeschlossen werden kann. Hierdurch kann im Betrieb anfallender Sägestaub abgesaugt werden. Auch die DE 44 33 829 A1 offenbart einen solchen Absaugkanal, welcher jedoch überwiegend seitlich vom Schnittspalt angeordnet ist.

Aufgabe der vorliegenden Erfindung ist es, einen Druckbalken der eingangs genannten Art zu schaffen, bei dem möglichst zuverlässig Ablagerungen von Sägestaub im Druckbalken verhindert oder diese zumindest reduziert werden.

Diese Aufgabe wird durch einen Druckbalken mit den Merkmalen des Anspruchs 1 gelöst. Vorteilhafte Weiterbildungen der Erfindung sind in Unteransprüchen angegeben. Darüber hinaus sind wichtige Merkmale der Erfindung in der nachfolgenden Beschreibung genannt und in der Zeichnung dargestellt. Grundsätzlich gilt, dass die besagten Merkmale für die Erfindung auch in ganz unterschiedlichen Kombinationen wichtig sein können, ohne dass hierauf jeweils explizit hingewiesen wird.

Der erfindungsgemäße Druckbalken hat den Vorteil, dass die Absaugleistung über die Länge des Druckbalkens hinweg deutlich gleichmäßiger ist als bei den herkömmlichen Druckbalken. Auf diese Weise kann verhindert werden, dass es Bereiche gibt, in denen die Absaugleistung nicht ausreicht, um den Sägestaub in einer erforderlichen und gewünschten Art und Weise aus dem Sägeraum abzuführen. Eine unerwünschte Ansammlung von Sägestaub im Sägeraum oder in sonstigen Komponenten des Druckbalkens wird so vermieden. Typischerweise erstreckt sich der Absaugkanal über die gesamte Länge des Sägeraums, und entsprechend ist auch über die gesamte Länge von Absaugkanal und Sägeraum die Fluidverbindung vorhanden. Damit werden die anfallenden Späne auf kürzestem Wege direkt aus dem Sägeraum abgesaugt. Dies führt zu einem besseren Absaugergebnis, da die Späne nicht längs zum Sägeraum über dessen ganze Länge transportiert werden müssen und sich dabei wieder absetzen.

Besonders einfach kann die Fluidverbindung durch einen länglichen Spalt mit veränderlichem Querschnitt realisiert werden. Grundsätzlich denkbar sind aber auch diskrete Öffnungen, die jeweils oder gruppenweise unterschiedlichen Durchmesser beziehungsweise eine unterschiedliche Öffnungsfläche aufweisen.

Im Falle eines Spaltes sollte sich dieser, ausgehend von der Absaugöffnung, kontinuierlich, insbesondere linear erweitern. Dies ist einfach herstellbar und führt bereits zu einer guten Vergleichmäßigung der Absaugleistung über die Länge des Druckbalkens. Grundsätzlich denkbar ist aber auch eine stückweise konstante Weite des Spalts oder eine exponentiell anwachsende Weite.

Ein direkt oberhalb des Sägeraums angeordneter Absaugkanal hat einen hohen Wirkungsgrad, da die Anzahl beziehungsweise der Umfang der Richtungsänderungen des Sägestaubs vom Werkstück bis zum Absaugkanal reduziert wird oder sogar überhaupt keine Richtungsänderungen erforderlich sind.

In diesem Zusammenhang besteht eine konstruktiv einfache und daher preisgünstige Lösung darin, dass der Spalt vom abragenden Rand einer Trennwand begrenzt wird, welche von einer im Wesentlichen vertikalen Begrenzungswand abragt und den Absaugkanal vom Sägeraum trennt.

Ebenfalls zur Vereinfachung der Konstruktion des Druckbalkens und auch zu seiner Gewichtsreduzierung trägt bei, wenn er eine Blechkonstruktion oder eine Konstruktion aus Aluminum-Strangprofilen umfasst. Derartige Konstruktionen sind darüber hinaus preiswert fertigbar.

Bei einer solchen Blechkonstruktion kann eine Trennwand, deren Rand einen Spalt begrenzt, der zu der Fluidverbindung gehört, durch ein solches Blechteil gebildet werden. Dies reduziert ebenfalls den konstruktiven Aufwand.

Zur Erhöhung der Saugleistung und/oder zur Vergleichmäßigung der Saugleistung über die Länge des Druckbalkens trägt bei, wenn eine Mehrzahl von separaten und hintereinander angeordneten Absaugkanälen vorgesehen ist, welche jeweils über eine eigene Absaugöffnung und eine eigene Fluidverbindung zum Sägeraum hin verfügen. Jede dieser Fluidverbindungen weist dann wiederum einen nahe zur Absaugöffnung größeren und einen ferne von der Absaugöffnung kleineren Querschnitt auf. In Weiterbildung hierzu wird vorgeschlagen, dass die Absaugkanäle einzeln zu- und abschaltbar und/oder die entsprechenden Fluidverbindungen gezielt veränderbar sind. Hierdurch kann die Abluftmenge reduziert werden, was wiederum den Energiebedarf im betrieb reduziert. Außerdem kann so die Absaugleistung partiell auf besonders beanspruchte Bereiche des Sägeraums konzentriert werden, beispielsweise dann, wenn ein Querschnitt durchgeführt wird.

Der Querschnitt der Fluidverbindung kann insgesamt oder abschnittsweise einstellbar sein, um so die Absaugmenge individuell an die Bedürfnisse des aktuellen Betriebs und/oder der individuellen Maschine anpassen zu können.

Nachfolgend wird ein besonders bevorzugtes Ausführungsbeispiel der vorliegenden Erfindung unter Bezugnahme auf die beiliegende Zeichnung näher erläutert.

In der Zeichnung zeigen:
- Figur 1: eine schematische Seitenansicht einer Sägemaschine mit einem Druckbalken;
- Figur 2: einen Schnitt durch den Druckbalken von Figur 1;
- Figur 3: einen Schnitt längs der Linie III-III von Figur 2; und
- Figur 4: eine Seitenansicht auf den Druckbalken von Figur 1.

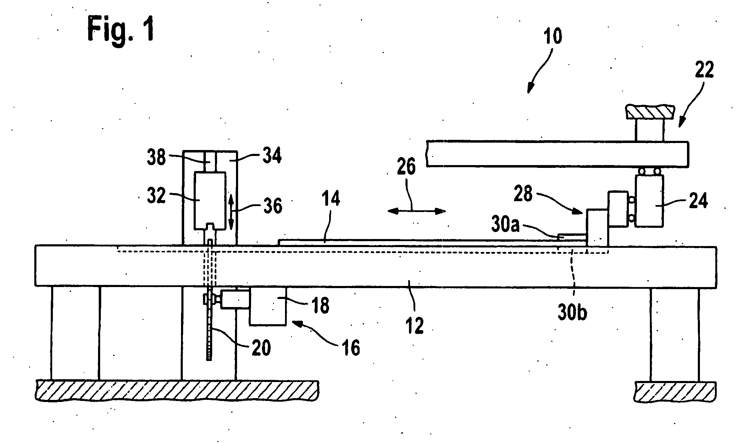

In Figur 1 trägt eine Sägemaschine insgesamt das Bezugszeichen 10. Sie umfasst einen horizontalen Auflagetisch 12, auf dem ein Werkstück 14, gegebenenfalls auch ein ganzer Werkstückstapel, abgelegt werden kann. Die Sägemaschine 10 umfasst ferner eine Säge 16 mit einem Sägewagen 18 und einem Sägeblatt 20. Der Sägewagen 18 kann in einer senkrecht zur Blattebene verlaufenden Richtung sowie senkrecht zur Ebene des Auflagetisches 12 bewegt werden. Auf diese Weise kann das Werkstück 14 in Teilstücke zersägt werden.

Um das Werkstück 14 zur Säge 16 bewegen zu können, verfügt die Sägemaschine 10 auch über eine Vorschubvorrichtung 22. Zu dieser gehört ein Programmschieber 24, der in Richtung des Doppelpfeiles 26 bewegt werden kann. Am Programmschieber 24 sind mehrere Spannzangen 28 angebracht, zwischen deren Klemmbacken 30a und 30b der von der Säge 16 fern liegende Rand des Werkstücks 14 gespannt werden kann.

Das Sägeblatt 20 ragt, wie aus Figur 1 ersichtlich ist, in der Sägestellung des Sägewagens 18 etwas über die Oberseite des Auflagetisches 12 hinaus. Um zu verhindern, dass das Werkstück 14 bei der Durchführung des Sägeschnitts vom Sägeblatt 20 vom Auflagetisch 12 weggedrückt wird, verfügt die Sägemaschine 10 über einen Druckbalken 32. Bei diesem handelt es sich um ein längliches Teil, das sich senkrecht zur Blattebene von Figur 1 über die gesamte Breite des Auflagetisches 12 und somit über die gesamte Länge der Schnittlinie der Säge 16 erstreckt.

Der Druckbalken 32 ist an seinen beiden Enden an vertikalen Trägern vertikal verschieblich gelagert. Aus Darstellungsgründen ist in Figur 1 jedoch nur der hintere der beiden vertikalen Träger gezeigt, der das Bezugszeichen 34 trägt. Die vertikale Verschieblichkeit des Druckbalkens 32 wird durch einen Doppelpfeil 36 angedeutet, die Linearführung des Druckbalkens 32 im Träger 34 ist mit 38 bezeichnet. Im Betrieb wird der Druckbalken 32 auf das Werkstück 14 abgesenkt, das Werkstück 14 also zwischen Druckbalken 32 und Auflagetisch 12 verklemmt.

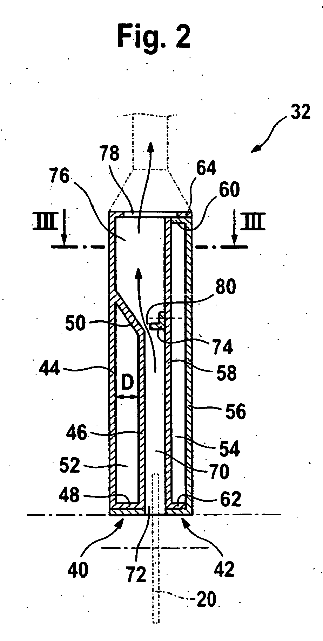

Der genaue Aufbau des Druckbalkens 32 geht aus den Figuren 2 bis 4 hervor:

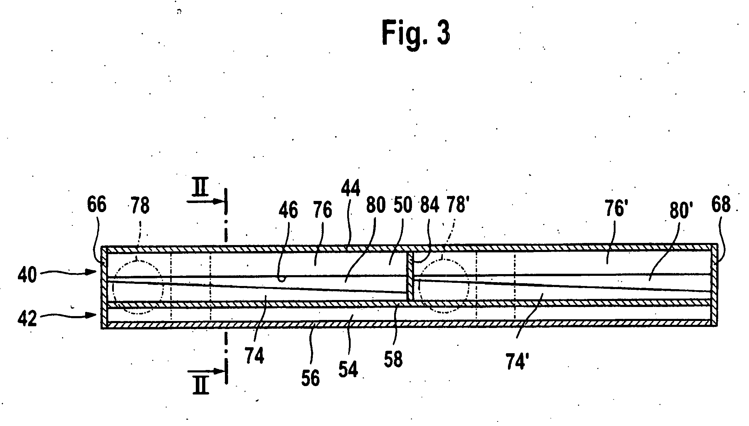

Wie insbesondere aus den Figuren 2 und 3 ersichtlich ist, ist der Druckbalken im vorliegenden Ausführungsbeispiel als Blechkonstruktion aufgebaut. In einem nicht gezeigten Ausführungsbeispiel könnte er aus Aluminiumprofilen aufgebaut sein. Er umfasst ein in Figur 2 linkes Gehäuseteil 40 und ein rechtes Gehäuseteil 42. Das linke Gehäuseteil 40 umfasst eine Außenwand 44, die im oberen Bereich des Druckbalkens 32 die Innenwand des Gehäuseteils 40 bildet. Im unteren Bereich des Druckbalkens 32 beziehungsweise des linken Gehäuseteils 40 verfügt dieses über einen Innenwand 46, die in einem Abstand D zur Außenwand 44 angeordnet ist. Unten sind Außenwand 44 und Innenwand 46 durch einen horizontalen Blechstreifen 48 miteinander verbunden, oben durch einen schrägen Blechstreifen 50. Auf diese Weise verfügt das linke Gehäuseteil 40 über einen geschlossenen Blechkasten 52 mit hoher Torsions- und Biegesteifigkeit.

Das rechte Gehäuseteil 42 ist bei dem hier gezeigten Ausführungsbeispiel als rechteckiger Blechkasten 54 aufgebaut, mit einer Außenwand 56, einer Innenwand 58 sowie diese oben und unten verbindende Blechstreifen 60 und 62. Vom linken Gehäuseteil 40 ragt vom oberen Rand der Außenwand 44 ein sich horizontal zum rechten Gehäuseteil 42 erstreckender Blechstreifen 64 ab. Dieser ist an seinem abragenden Ende auf nicht näher dargestellte Art und Weise mit dem rechten Gehäuseteil 42 verbunden. An seinen beiden Stirnseiten ist der Druckbalken 32 durch Blechpaneele 66 und 68 geschlossen (vergleiche Figur 3).

Wie aus Figur 2 ersichtlich ist, ist die Innenwand 46 des linken Gehäuseteils 40 von der Innenwand 58 des rechten Gehäuseteils 42 beabstandet. Hierdurch wird zwischen diesen beiden Innenwänden 46 und 58 ein Sägeraum 70 gebildet, der über einen Schnittspalt 72 nach unten beziehungsweise nach außen offen ist. Auf diese Weise kann im Betrieb der Sägemaschine 10 das Sägeblatt 20 in den Sägeraum 70 eingreifen, wie in Figur 2 durch das strichpunktiert angedeutete Sägeblatt 20 dargestellt ist.

Auf Höhe des oberen Randes der Innenwand 46 des linken Gehäuseteils 40 ist an der Innenwand. 58 des rechten Gehäuseteils 42 ein Blechstreifen 74 befestigt. Dieser begrenzt den Sägeraum 70 nach oben hin. Der Blechstreifen 50, die Außenwand 44 des linken Gehäuseteils 40, der Blechstreifen 64, ein Abschnitt der Innenwand 58 des rechten Gehäuseteils 42 sowie der Blechstreifen 74 begrenzen einen Absaugkanal 76. Der Blechstreifen 74 bildet insoweit eine Trennwand zwischen dem Sägeraum 70 und dem Absaugkanal 76. Der Absaugkanal 76 ist über eine Absaugöffnung 78, die im Blechstreifen 64 vorhanden ist, mit einer nicht dargestellten Saugquelle verbindbar. Bei der Saugquelle kann es sich beispielsweise um eine Saugpumpe handeln.

Wie aus den Figuren 2 und 3 ersichtlich ist, erstreckt sich die Trennwand 74 von der Innenwand 58 des rechten Gehäuseteils 42 nicht ganz bis zur Innenwand 46 des linken Gehäuseteils 40, sondern endet in einem Abstand von dieser. Der abragende Rand der Trennwand 74 begrenzt insoweit einen Spalt 80 der, wie weiter unten noch stärker im Detail beschrieben werden wird, eine Fluidverbindung zwischen dem Sägeraum 70 und dem direkt oberhalb von diesem angeordneten Absaugkanal 76 bildet. Wie aus Figur 3 ersichtlich ist, verläuft der abragende Rand der Trennwand 74 schräg, was dazu führt, dass sich der Spalt 80, ausgehend von der Absaugöffnung 78, kontinuierlich, nämlich linear erweitert. Oder, mit anderen Worten, nahe zur Absaugöffnung 78 weist der Spalt 80 einen kleineren Querschnitt auf als ferne von der Absaugöffnung 78.

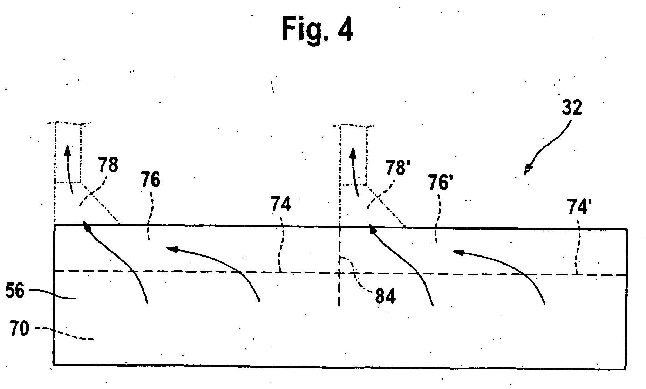

Wie aus den Figuren 3 und 4 hervorgeht, verfügt in dem hier gezeigten Ausführungsbeispiel der Druckbalken 32 über einen zweiten Absaugkanal 76', der sich in Längsrichtung an den Absaugkanal 76 anschließt. Jeder dieser Absaugkanäle 76 und 76' verfügt über eine eigene Austrittsöffnung, wobei die Austrittsöffnung des Absaugkanals 76' mit 78' bezeichnet ist. Die Absaugkanäle 76 und 76' sind durch eine Trennwand 84 voneinander getrennt. Jeder Absaugkanal 76 und 76' verfügt über eine eigene Fluidverbindurig, die für den Absaugkanal 76' durch den Spalt 80' gebildet und vom Rand eines Blechstreifens 74' begrenzt ist. Für beide Spalte 80 beziehungsweise 80' gilt, dass diese nahe zur jeweiligen Absaugöffnung 78 beziehungsweise 78' einen kleineren Querschnitt aufweisen als ferne von der entsprechenden Absaugöffnung 78 beziehungsweise 78'.

In dem nicht dargestellten Ausführungsbeispiel einer Großsäge sind eine Vielzahl von in Längsrichtung hintereinander angeordneten Absaugkanälen und Fluidverbindungen vorhanden. In weiteren nicht dargestellten Ausführungsbeispielen sind die Absaugkanäle einzeln zu- und abschaltbar und/oder die entsprechenden Fluidverbindungen gezielt veränderbar. Beispielsweise kann der Querschnitt der Fluidverbindung insgesamt oder abschnittsweise einstellbar sein.

## Patentansprüche

1. Druckbalken (32) für eine Sägemaschine (10), mit einem sich in Längsrichtung des Druckbalkens (32) erstreckenden Sägeraum (70), der durch einen Schnittspalt (72) nach außen offen ist, so dass in den Sägeraum (70) im Betrieb ein Sägeblatt (20) einer Säge (16) eingreifen kann, mit einem Absaugkanal (76), der parallel zum Sägeraum (70) angeordnet und mit diesem fluidisch verbunden ist, und mit einer Absaugöffnung (78, 78'), durch die der Absaugkanal (76) mit einer Saugquelle verhunden werden kann, **dadurch gekennzeichnet, dass** die Fluidverbindung (80, 80') zwischen Absaugkanal (76) und Sägeraum (70) nahe zur Absaugöffnung (78, 78') einen kleineren Querschnitt aufweist als ferne von der Absaugöffnung (78, 78').

2. Druckbalken (32) nach Anspruch 1, **dadurch gekennzeichnet, dass** die Fluidverbindung einen sich parallel zu Absaugkanal (76) und Sägeraum (70) erstreckenden länglichen Spalt (80, 80') umfasst.

3. Druckbalken (32) nach Anspruch 2, **dadurch gekennzeichnet, dass** sich der Spalt (80, 80'), ausgehend von der Absaugöffnug (78, 78'), kontinuierlich, insbesondere linear erweitert.

4. Druckbalken (32) nach Anspruch 3, **dadurch gekennzeichnet, dass** der Absaugkanal (76) direkt oberhalb des Sägeraums (70) angeordnet ist.

5. Druckbalken (32) nach Anspruch 4, **dadurch gekennzeichnet, dass** der Spalt (80, 80') vom Rand einer Trennwand (74, 74') begrenzt wird, welche von einer im Wesentlichen vertikalen Begrenzungswand (58) abragt und den Absaugkanal (76) vom Sägeräum (70) trennt.

6. Druckbalken (32) nach einem der vorhergehenden Ansprüche, **dadurch gekennzeichnet, dass** er eine Blechkonstruktion umfasst oder aus Aluminiumprofilen aufgebaut ist.

7. Druckbalken (32) nach Anspruch 6, **dadurch gekennzeichnet, dass** eine Trennwand (74, 74'), deren Rand einen Spalt (80, 80') begrenzt, der zu der Fluidverbindung gehört, durch ein Blechteil gebildet wird.

8. Druckbalken (32) nach einem der vorhergehenden Ansprüche, **dadurch gekennzeichnet, dass** er eine Mehrzahl von separaten und hintereinander angeordneten Absaugkanälen (76, 76') umfasst.

9. Druckbalken (32) nach Anspruch 8, **dadurch gekennzeichnet, dass** die Absaugkanäle (76, 76') einzeln zu- und abschaltbar und/oder die entsprechenden Fluidverbindungen (80, 80') gezielt veränderbar sind.

10. Druckbalken (32) nach einem der vorhergehenden Ansprüche, **dadurch gekennzeichnet, dass** der Querschnitt der Fluidverbindung (80, 80') insgesamt oder abschnittsweise einstellbar ist.

## Claims

1. A pressure beam (32) for a sawing machine (10), having a sawing chamber (70) extending in the longitudinal direction of the pressure beam (32), which chamber is open to the outside through a cut gap (72), so that in operation, a saw blade (20) of a saw (16) can engage the sawing chamber (70), and having a suction extraction conduit (76), which is disposed parallel to the sawing chamber (70) and communicates fluidically with it; and having a suction extraction opening (78, 78'), through which the suction extraction conduit (76) can communicate with a source of suction, **characterized in that** the fluidic connection (80, 80') between the suction extraction conduit (76) and the sawing chamber (70) has a smaller cross section near the suction extraction opening (78, 78') than far away from the suction extraction opening (78, 78').

2. The pressure beam (32) as defined by claim 1, **characterized in that** the fluidic connection includes an elongated gap (80, 80') extending parallel to the suction extraction conduit (76) and to the sawing chamber (70).

3. The pressure beam (32) as defined by claim 2, **characterized in that** the gap (80, 80') widens continuously, in particular linearly, beginning at the suction extraction opening (78, 78').

4. The pressure beam (32) as defined by claim 3, **characterized in that** the suction extraction conduit (76) is disposed directly above the sawing chamber (70).

5. The pressure beam (32) as defined by claim 4, **characterized in that** the gap (80, 80') is bounded by the edge of a partition (74, 74') which protrudes from a substantially vertical boundary wall (58) and separates the suction extraction conduit (76) from the sawing chamber (70).

6. The pressure beam (32) as defined by one of the foregoing claims, **characterized in that** it includes a sheet-metal construction or is constructed of aluminum profile sections.

7. The pressure beam (32) as defined by claim 6, **characterized in that** a partition (74, 74') whose edge defines a gap (80, 80') that belongs to the fluidic connection is formed by a sheet-metal part.

8. The pressure beam (32) as defined by one of the foregoing claims, **characterized in that** it includes a plurality of separate suction extraction conduits (76, 76'), disposed one after the other.

9. The pressure beam (32) as defined by claim 8, **characterized in that** the suction extraction conduits (76, 76') are openable and closable individually and/or the corresponding fluidic connections (80, 80') are purposefully variable.

10. The pressure beam (32) as defined by one of the foregoing claims, **characterized in that** the cross section of the fluidic connection (80, 80') is adjustable as a whole or in portions.

## Revendications

1. Barre de pression (32) pour une machine de sciage (10), comportant un espace de sciage (70), qui s'étend dans la direction longitudinale de la barre de pression (32) et qui s'ouvre vers l'extérieur par une fente de coupe (72), de telle sorte qu'en cours de service, une lame de scie (20) d'une scie (16) peut s'engager dans l'espace de sciage (70), comportant un conduit d'aspiration (76), qui est disposé parallèlement à l'espace de sciage (70) et communique avec ce dernier via une liaison fluidique, et comportant une ouverture d'aspiration (78, 78'), par l'intermédiaire de laquelle le conduit d'aspiration (76) peut être relié à une source d'aspiration, **caractérisée en ce que** la liaison fluidique (80, 80') entre le conduit d'aspiration (76) et l'espace de sciage (70) possède à proximité de l'ouverture d'aspiration (78, 78') une section transversale plus petite que celle éloignée de l'ouverture d'aspiration (78, 78').

2. Barre de pression (32) selon la revendication 1, **caractérisée en ce que** la liaison fluidique comprend une fente (80, 80') allongée, qui s'étend parallèlement au conduit d'aspiration (76) et à l'espace de sciage (70).

3. Barre de pression (32) selon la revendication 2, **caractérisée en ce que** la fente (80, 80') s'élargit en continu, en particulier linéairement, à partir de l'ouverture d'aspiration (78, 78').

4. Barre de pression (32) selon la revendication 3, **caractérisée en ce que** le conduit d'aspiration (76) est disposé directement au-dessus de l'espace de sciage (70).

5. Barre de pression (32) selon la revendication 4, **caractérisée en ce que** la fente (80, 80') est délimitée par le bord d'une cloison (74, 74') qui s'avance en saillie à partir d'une paroi de délimitation (58) sensiblement verticale et fait la séparation entre le conduit d'aspiration (76) et l'espace de sciage (70).

6. Barre de pression (32) selon l'une quelconque des revendications précédentes, **caractérisée en ce qu'**elle comprend une construction en tôle ou est constituée de profilés en aluminium.

7. Barre de pression (32) selon la revendication 6, **caractérisée en ce qu'**une cloison (74, 74'), dont le bord délimite une fente (80, 80') qui appartient à la liaison fluidique, est formée par un élément en tôle.

8. Barre de pression (32) selon l'une quelconque des revendications précédentes, **caractérisée en ce qu'**elle comprend une pluralité de conduits d'aspiration (76, 76') séparés, disposés les uns derrière les autres.

9. Barre de pression (32) selon la revendication 8, **caractérisée en ce que** les conduits d'aspiration (76, 76') peuvent être mis en service et hors service individuellement et/ou les liaisons fluidiques (80, 80') correspondantes peuvent être modifiées de manière ciblée.

10. Barre de pression (32) selon l'une quelconque des revendications précédentes, **caractérisée en ce que** la section transversale de la liaison fluidique (80, 80') peut être réglée en totalité ou par zones.
